# FASCICULE DE BREVET EUROPEEN

(11) **EP 2 197 567 B1**
(45) Date de publication et mention de la délivrance du brevet: **15.06.2011**
(21) Numéro de dépôt: 08841957.7
(22) Date de dépôt: 02.10.2008
(51) Int. Cl.: B01D 53/94, B01J 35/04

(54) **STRUCTURE DE PURIFICATION TEXTURE INCORPORANT UN SYSTEME DE CATALYSE ELECTROCHIMIQUE**
TEXTURIERTE REINIGUNGSSTRUKTUR MIT EINEM ELEKTROCHEMISCHEN KATALYSATORSYSTEM
TEXTURIZED PURIFICATION STRUCTURE INCORPORATING AN ELECTROCHEMICAL CATALYST SYSTEM

(30) Priorité: 08.10.2007 FR 0758154
(43) Date de publication de la demande: 23.06.2010
(73) Titulaire: Saint-Gobain Centre de Recherches et d'Etudes Européen, 92400 Courbevoie (FR)
(72) Inventeur: ANDY, Patricia, F-84300 Les Taillades (FR); PRINCIVALLE, Agnès, F-84800 Lagnes (FR)
(74) Mandataire: Lucas, Francois
(86) Numéro de dépôt international: PCT/FR2008/051791
(87) Numéro de publication internationale: WO 2009/053590

(56) Documents cités:
- FR-A- 2 899 493
- JP-A- 2001 145 837
- JP-A- 2004 058 029
- US-B1- 6 878 354

## Description

La présente invention se rapporte au domaine des structures de purification d'un gaz chargé en polluants gazeux essentiellement du type NOₓ. Plus particulièrement, l'invention se rapporte aux structures en nid d'abeille, notamment utilisées pour traiter les gaz d'échappement d'un moteur essence ou de préférence diesel, et incorporant un système combinant un catalyseur A de réduction desdites espèces polluantes du type NOₓ et un catalyseur B d'oxydation d'hydrocarbures HC et/ou d'oxydation des suies et/ou de réactions de vaporéformage du type HC+H₂O → 3/2H₂ + CO et/ou de réactions des gaz à l'eau du type CO+H₂O → H₂ + CO₂.

Les techniques et les problèmes liés à la purification des gaz pollués, notamment en sortie des lignes d'échappement des véhicules automobiles essence ou diesel sont bien connus de l'art. Un catalyseur conventionnel trois voies permet le traitement conjoint des polluants NOₓ, CO et HC et leur conversion en des gaz neutres et chimiquement non nocifs tels que N₂, CO₂ et H₂O. Une très bonne efficacité du système n'est cependant atteinte que par un réglage continuel de la richesse du mélange aircarburant. Il est ainsi connu que le moindre écart par rapport à la stoechiométrie du mélange provoque une forte augmentation des émissions des polluants.

Pour résoudre ce problème, il a été proposé d'incorporer au catalyseur des matériaux permettant temporairement de fixer les NOₓ (souvent appelés dans le métier NOₓ trap) lorsque le mélange est pauvre (c'est à dire sous stoechiométrique). L'inconvénient majeur d'un tel système est cependant que la réduction des NOx ne peut être réalisée qu'au prix d'une surconsommation de carburant, lors d'une phase ultérieur de fonctionnement en mélange riche. La désorption des NOx piégés sur le catalyseur et leur réduction catalytique en azote gazeux N₂ ne peuvent en effet être obtenues qu'en présence, au niveau du catalyseur de réduction, d'une quantité suffisante des espèces réductrices, sous la forme d'hydrocarbures ou de monoxyde de carbone CO ou encore d'hydrogène H₂, l'hydrogène pouvant être lui-même obtenu par une réaction catalytique entre les hydrocarbures HC et la vapeur d'eau ou entre le CO et la vapeur d'eau.

Le document US-B1-6 878 354 décrit un dispositif pour la purification de gaz d'échappement, comprenant des particules de catalyseurs d'oxydation et de réduction reliés entre eux par un conducteur électronique et un conducteur ionique.

A l'heure actuelle, aucun système n'est connu qui permet une conversion substantielle des NOₓ en N₂ dans une atmosphère pauvre, c'est à dire en présence d'un excès d'oxygène. L'un des buts de la présente invention est justement de fournir un tel système, permettant notamment la conversion d'une quantité substantielle des NOx même lorsque le rapport air/carburant des gaz d'échappement est pauvre.

On connaît bien, de part le brevet US 6,878,354 une système de catalyse électrochimique qui permettrait théoriquement une conversion des NOx fonctionnant même en dehors de la stoechiométrie. Le système comprend la combinaison d'un catalyseur d'oxydation des HC et CO et de réduction des NOₓ, les deux étant couplés sur le modèle d'une pile électrochimique par l'intermédiaire de matériaux métalliques ou inorganiques. Ces matériaux établissant la jonction entre les catalyseurs sont choisis parmi les conducteurs électroniques ou ioniques, et fournissent « en continu », dans le système, les différents espèces chargées (par exemple électrons, ions oxygènes 0²⁻) nécessaires aux réactions simultanées de réduction et d'oxydation. De tels systèmes apparaissent avantageux car ils permettent une réaction électrochimique couplée entre deux catalyseurs de réduction A et d'oxydation B, indépendamment des conditions du milieu gazeux. Selon cette publication, un tel système permet notamment d'augmenter la conversion catalytique des espèces polluantes notamment dans un fonctionnement d'un moteur en mélange pauvre.

Selon les auteurs, la présence d'un tel système comprenant un conducteur ionique D et un conducteur électronique C permet simultanément l'oxydation des espèces réductrices du type HC, CO, suies ou H₂ et la réduction des espèces oxydantes du type NOₓ.

Cependant, l'efficacité d'un tel système apparaît limité car une mise en oeuvre efficace nécessite un contact étroit entre les quatre éléments constituant le système électrochimique. Ainsi, dans les modes de réalisation décrits dans le brevet US 6,878,354, les catalyseurs A et B sont déposés sous la forme de particules sur le monolithe. L'efficacité d'un tel système dépend alors fortement des conditions de dépôt des catalyseurs A et B, ainsi que des conditions des dépôts des conducteurs électroniques C et ioniques D. En effet, les propriétés obtenues sont fortement dépendantes de la dispersion des différentes phases correspondant aux différents constituants sur le support utilisé, une connexion étant nécessaire entre ces quatre éléments pour le bon fonctionnement du système électrochimique.

En outre, l'efficacité de la conversion des espèces polluantes peut également être substantiellement limitée par les caractéristiques intrinsèques des matériaux utilisés comme conducteur ionique et électronique. Plus précisément, le système électrochimique étant constitué de grains de petite taille aléatoirement disposés les uns par rapport aux autres, son efficacité est nécessairement limitée d'une part par les connections entre les grains et d'autre part par la faible quantité des espèces conductrices (électrons et/ou ions) disponibles pour le bon fonctionnement du système de catalyse électrochimique. Tout particulièrement, les procédures de dépôt des catalyseurs A et B dans la porosité du support, notamment les conditions du procédé d'imprégnation par les solutions comprenant le catalyseur, sont apparues très difficiles à déterminer, l'expérience montrant qu'une répartition idéale des sites actifs favorisant les contacts successifs du type ADB ou BDA ou ACB ou BCA, nécessaires au fonctionnement optimal du système électrochimique, est très difficile à mettre en oeuvre et à reproduire. Notamment se posent des problèmes de répartition des sites actifs dans les cas où le procédé de dépôt par imprégnation conduit à des épaisseurs déposées localement trop élevées ou irrégulières.

En outre, des problèmes d'adhésion de la solution d'imprégnation de catalyseur A ou B sur le substrat poreux sont également apparues. Le défaut d'adhésion se caractérise notamment par un dépôt final ne présentant pas les caractéristiques d'homogénéité et d'uniformité requises pour le fonctionnement optimal du système électrochimique. Ceci est d'autant plus critique sur des matrices se présentant sous la forme de grains liés les uns aux autres et dont la surface est relativement lisse et/ou convexe, notamment les matrices obtenus par interconnexion entre des microcrystallites de carbure de silicium (SiC).

Une solution possible pour résoudre les problèmes de dépôt qui précèdent pourrait être d'augmenter la concentration des particules de catalyseurs A et B dans les solutions utilisées pour l'imprégnation. Cependant, l'augmentation de la quantité de matière alors déposée dans la porosité du matériau inorganique conduit à une augmentation sensible de la perte de charge (pressure loss) associée à la structure filtrante, très préjudiciable pour l'application comme filtre à particules. Il faut bien noter qu'une compensation éventuelle par une augmentation de la porosité de la structure filtrante conduit alors nécessairement à une chute de la résistance mécanique et thermomécanique de la structure poreuse.

En plus de la nécessité de résoudre les problèmes de mise en oeuvre cités précédemment, il existe en outre un besoin d'obtenir une structure présentant une performance catalytique suffisamment stable dans le temps. Plus particulièrement, l'activité catalytique doit demeurer acceptable durant toute la durée de vie du filtre, au sens des normes anti-pollution actuelles et à venir.

Les essais menés par le demandeur ont montré également qu'un problème du vieillissement se posait pour le système catalytique décrit dans le brevet US 6,878,354. Ce problème pourrait être partiellement résolu par un dépôt plus important. Cependant un tel dépôt induit les mêmes problèmes que cités précédemment et nécessite l'utilisation d'une quantité plus importante des métaux nobles compris dans le catalyseur.

La structure selon l'invention a pour but de répondre aux problèmes précédemment exposés en fournissant un support electrocatalysé particulièrement adapté à des applications filtrantes et présentant des performances de purification améliorées, notamment en ce qui concerne la quantité des NOx réduits, notamment lors d'un fonctionnement du moteur en mélange pauvre, la perte de charge et la résistance au vieillissement.

Plus particulièrement, la présente invention se rapporte à une structure, de préférence en nid d'abeille, pour la purification d'un gaz pollué, par exemple un gaz d'échappement d'un moteur diesel ou essence, comprenant :
- une matrice poreuse d'un matériau inorganique, sous la forme de grains reliés les uns aux autres de façon à ménager entre eux des cavités telles que sa porosité ouverte soit comprise entre 20 et 70% et le diamètre médian de sa distribution de pores compris entre 5 et 40 µm,
- un système électrochimique de traitement dudit gaz constitué par:
   a. un catalyseur A de réduction des espèces polluantes du type NOₓ,
   b. un catalyseur B d'oxydation d'hydrocarbures HC,
   c. un composé C conducteur électronique,
   d. un composé D conducteur ionique,
   lesdits catalyseurs A et B étant en contact électronique par l'intermédiaire du composé C et en contact ionique par l'intermédiaire du composé D, ladite structure étant caractérisée :
- en ce que les catalyseurs A et B sont disposés dans la porosité du matériau inorganique,
- en ce que les grains et éventuellement les joints de grains du matériau inorganique sont recouverts sur au moins une partie de leur surface d'un matériau de texturation, ladite texturation consistant en des irrégularités dont les dimensions sont comprises entre 10 nm et 5 microns,
- en ce que ledit matériau de texturation est conducteur ionique, électronique ou ionique et électronique et constitue respectivement l'élément C, l'élément D ou les éléments C et D du système électrochimique de traitement des gaz.

Par exemple, lesdites irrégularités se présentant par exemple sous la forme de billes, de cristallites, d'amas polycristallins, voire de bâtonnets ou de structures aciculaires, de creux ou de cratères, lesdites irrégularités présentant un diamètre moyen d compris entre environ 10 nm et environ 5 microns et une hauteur moyenne h ou une profondeur moyenne p comprise entre environ 10 nm et environ 5 microns.

Par diamètre moyen d, il est entendu au sens de la présente description le diamètre moyen des irrégularités, celles-ci étant individuellement définies à partir du plan tangent à la surface du grain ou du joint de grain sur laquelle elles sont situées.

Par hauteur moyenne h, il est entendu au sens de la présente description la distance moyenne entre le sommet du relief formé par la texturation et le plan cité précédemment.

Par profondeur moyenne p, il est entendu au sens de la présente description la distance moyenne entre d'une part le point le plus profond formé par l'empreinte, par exemple le creux ou le cratère de la texturation et d'autre part le plan cité précédemment.

Selon un mode possible, le diamètre médian d des irrégularités est compris entre 100 nm et 2,5 microns.

Par exemple, la hauteur h ou la profondeur moyenne p des irrégularités est compris entre 100 nm et 2,5 microns.

Selon un mode préféré, le matériau de texturation recouvre au moins 10% de la surface totale des grains et éventuellement des joints de grains du matériau inorganique constituant la matrice poreuse. De préférence, le matériau de texturation recouvre au moins 15% de la surface totale des grains et éventuellement des joints de grains du matériau inorganique constituant la matrice poreuse.

Typiquement, le diamètre équivalent moyen d et/ou la hauteur h ou la profondeur moyenne p des irrégularités sont inférieurs à la taille moyenne des grains du matériau inorganique constituant la matrice d'un facteur compris entre 1/2 et 1/1000.

Par exemple, le diamètre équivalent moyen d et/ou la hauteur h ou la profondeur moyenne p des irrégularités sont inférieurs à la taille moyenne des grains du matériau inorganique constituant la matrice d'un facteur compris entre 1/5 et 1/100.

Selon un mode possible, le matériau de texturation est de même nature que le matériau inorganique constituant la matrice.

Par « de même nature », on entend au sens de la présente invention que le matériau de texturation et le matériau inorganique constituant la matrice sont à base d'un même composé, par exemple du SiC, c'est-à-dire que ledit composé (ex : SiC) est présent à hauteur d'au moins 25% poids dans l'un et l'autre, de préférence d'au moins 45% poids dans l'un et l'autre et de manière très préférée d'au moins 70% poids dans l'un et l'autre.

Le matériau inorganique constituant la matrice est par exemple à base de carbure de silicium SiC. En particulier, le matériau inorganique peut être à base de SiC dopé, par exemple par de l'aluminium ou de l'azote, de telle façon que sa résistivité électronique soit inférieure à 20 Ohm.cm à 400°C.

Selon une première réalisation, les irrégularités sont constituées par des cristallites ou par un amas de cristallites d'un matériau cuit ou fritté à la surface des grains de la matrice poreuse.

Selon une autre réalisation, les irrégularités sont constituées essentiellement par des billes d'un matériau conducteur électronique et/ou ionique.

Alternativement, les irrégularités peuvent également se présenter sous la forme de cratères creusés dans un matériau cuit ou fritté à la surface des grains de la matrice poreuse.

L'invention se rapporte également à la structure intermédiaire pour l'obtention d'un filtre catalytique pour le traitement des particules solides et des polluants gazeux selon l'une des réalisations précédentes et comprenant une matrice poreuse constituée d'un matériau inorganique, sous la forme de grains reliés les uns aux autres de façon à ménager entre eux des cavités telles que la porosité ouverte soit comprise entre 20 et 70% et le diamètre médian de pore compris entre 5 et 40 µm, lesdits grains du matériau inorganique étant recouverts sur au moins une partie de leur surface d'un matériau de texturation selon l'une des revendications précédentes.

L'invention concerne en outre un procédé d'obtention d'un filtre tel que précédemment décrit et comprenant les étapes suivantes :
- mise en forme et cuisson d'une structure en nid d'abeille constituée d'une matrice poreuse d'un matériau inorganique, sous la forme de grains reliés les uns aux autres de façon à ménager entre eux des cavités telles que la porosité ouverte soit comprise entre 30 et 60% et le diamètre médian de pore soit compris entre 5 et 40 µm,
- dépôt à la surface d'au moins une partie des grains de la structure en nid d'abeille d'un matériau de texturation se présentant par exemple sous la forme de billes, de cristallites, d'amas polycristallins, de creux ou de cratères,
- imprégnation successives de la structure en nid d'abeille texturée par une ou plusieurs solutions comprenant les catalyseurs A et B ou un précurseur d'un catalyseur et éventuellement les matériaux conducteurs électroniques et ioniques ou leurs précurseurs.
Selon le procédé, le dépôt du matériau de texturation peut être obtenu par l'application d'une barbotine dudit matériau de recouvrement à la surface des grains, suivie d'un traitement thermique de cuisson ou de frittage, par l'application d'une solution sol-gel comprenant une charge sous la forme de billes ou de particules inorganiques,
suivie d'un traitement thermique de cuisson ou de frittage ou encore par l'application d'une solution sol-gel comprenant une charge sous la forme de billes ou de particules organiques, suivie d'un traitement thermique de cuisson ou de frittage.

Plus précisément, le procédé de texturation selon l'invention peut être obtenu soit :
1°) par dépôt d'une suspension, comme par exemple une barbotine constituée d'une poudre et d'un mélange de poudres de préférence dans un liquide tel que l'eau, ou un sol-gel chargé en particules minérales, ou d'un sol-gel organique ou organo-minéral, conduisant après un traitement thermique à un matériau de nature inorganique cristallisé et/ou vitreux, de préférence en céramique et de stabilité thermique sensiblement égale voire supérieure à celle de l'alumine qui est le plus souvent le principal constituant des revêtements catalytiques de l'art antérieur. Le dépôt est suivi d'un ou plusieurs traitement(s) thermique(s) du substrat, de préférence sous air mais éventuellement sous atmosphère controlée, par exemple sous argon ou sous azote, si cela est nécessaire notamment pour éviter une détérioration ou une oxydation du substrat ou du dépôt par exemple. Il peut aussi être envisagé de faire cette texturation sur le substrat cru ou partiellement cuit dès lors que la tenue mécanique et l'intégrité du substrat sont suffisantes pour réaliser l'opération de texturation et dès lors que les conditions de cuisson permettent d'obtenir les caractéristiques de texturation citées précédemment. Dans le cas des suspensions, en plus de la ou des poudres de nature inorganique (de préférence céramique) ou leurs précurseurs, par exemple sous la forme d'un composé organométallique, la formulation peut contenir des ajouts pris parmi la liste suivante: un ou plusieurs dispersants (par exemple une résine acrylique ou un dérivé d'amines), un liant de nature organique (par exemple une résine acrylique ou un dérivé de cellulose) voire de nature minérale (argile), un agent mouillant ou filmogène (par exemple un alcool de polyvinyle PVA), un ou plusieurs porogènes (par exemple des polymères, le latex, le polyméthacrylate de méthyle). Certains de ces composants pouvant cumuler plusieurs de ces fonctions. Tout comme la forme et la granulométrie des poudres ou des précurseurs et la nature du liquide de suspension, la nature et la quantité de ces ajouts vont impacter sur la taille des micro-texturations et leur localisation sur le substrat. La texturation préférée doit être réalisée sur la surface des grains mais aussi en partie sur les joints de grains.
2°) à partir d'une poudre ou d'un mélange de poudres par l'intermédiaire d'un gaz vecteur. Un dépôt direct à partir d'espèces liquides ou gazeuses par exemple par PVD (« physical vapour deposition » selon le terme anglais) ou CVD (« chemical vapour deposition » selon le terme anglais) est aussi possible.
D'autres méthodes de texturation peuvent également être employées selon l'invention telles que le traitement thermique sous gaz (par exemple O₂, N₂ dans le cas d'un substrat à base de SiC). Les procédés de gravure par voie plasma ou par voie chimique peuvent permettre également d'obtenir, selon les conditions de mise en oeuvre et en fonction de la nature du substrat, des texturations selon l'invention.

Le revêtement catalytique selon l'invention est typiquement obtenu par imprégnation d'une ou plusieurs solutions successives comprenant les catalyseurs du système électrochimique selon l'invention, sous la forme du matériau support ou ses précurseurs et d'une phase active ou d'un précurseur de la phase active. En général les précurseurs utilisés se présentent sous forme de sels ou de composés organiques ou minéraux, dissous ou en suspension dans une solution aqueuse ou organique. L'imprégnation est suivie d'un traitement thermique visant à obtenir le dépôt final d'une phase solide et catalytiquement active dans la porosité du filtre.
De tels procédés, ainsi que les dispositifs pour leur mise en oeuvre, sont par exemple décrits dans les demandes de brevets ou brevets US 2003/044520, WO 2004/091786, US 6,149,973, US 6,627,257, US 6,478,874, US 5,866,210, US 4,609,563, US 4,550,034, US 6,599,570, US 4,208,454 ou encore US 5,422,138.

Le catalyseur A utilisé pour la réaction de réduction est choisi parmi les catalyseurs bien connus de l'art pour leur activité et de préférence leur sélectivité vis-à-vis des réactions de réduction des NOx. Ils peuvent notamment être choisis parmi les composés de type métaux alcalins ou alcalino-terreux ou des terres rares, qui jouent en outre le rôle de piège à NOₓ, par exemple tels que décrits dans la demande EP 1 566 214, déposés en mélange avec un principe actif incluant des métaux précieux (Pt, Pd, Rh) par adsorption à la surface d'une poudre de grande surface spécifique, par exemple d'alumine.

Le catalyseur B utilisé pour la réaction d'oxydation des hydrocarbures est choisi parmi les catalyseurs bien connus de l'art pour leur activité et de préférence leur sélectivité vis-à-vis des réactions d'oxydation des hydrocarbures. En particulier, les catalyseurs de reformage et de vaporeformage utilisés dans le domaine de la pétrochimie et du raffinage peuvent être utilisés selon l'invention.

La disposition selon l'invention présente par rapport aux structures non texturées connues jusqu'à maintenant de nombreux avantages parmi lesquelles :
- l'introduction du système catalytique dans la porosité du support permet avantageusement d'augmenter fortement la surface développée de catalyseur accessible aux polluants, et par suite la probabilité de contact et d'échanges entre les espèces réactives,
- l'introduction d'une microtexturation à la surface des grains constituant la matrice permet d'augmenter encore cette surface,
- le support constitue selon l'invention soit le conducteur électronique C, soit le conducteur ionique D, soit les conducteurs ioniques et électroniques C et D. Cette disposition permet avantageusement de fournir au système électrochimique une quantité illimitée des espèces chargées (ions et/ou électrons), améliorant ainsi de façon sensible les capacités du système,
- un nombre limité des constituants du système doit être déposé sur le support, ce qui diminue fortement la dépendance des performances du système par rapport aux conditions de dépôt du catalyseur sur le support,
- une bonne compatibilité chimique entre le matériau inorganique poreux constituant le support et le système catalytique,
- la réduction des coûts de production, liée à une méthode plus simple de dépôt du fait du nombre plus faible de composés à déposer,
- une augmentation de l'efficacité catalytique, une quantité plus importante de catalyseur pouvant être déposée du fait du nombre limité de constituants devant être déposés dans la porosité de la matrice, sans pour autant augmenter la perte de charge,
- une durée de vie sensiblement prolongée de l'activité catalytique du filtre texturé.

Par exemple, le matériau inorganique poreux comprend ou est constitué par un matériau inorganique conducteur électronique du type carbure, par exemple le SiC, ou siliciure, par exemple MoSi₂ ou borure, par exemple TiB₂, ou de la famille La₁₋ₓSrₓMnO₃ ou du type oxydes mixtes de gadolinium et cérium (CGO).

Le matériau inorganique poreux peut également comprendre ou être constitué par un matériau inorganique conducteur par ion oxygène du type structure fluorite, par exemple la zircone stabilisée par CaO ou par Y₂O₃, les oxydes mixtes de gadolinium et cérium, ou de structure pérovskite, par exemple le gallate, les composés à base de Lanthane du type LaAlO₃ ou LaGaO₃ ou La₁₋ₓSrₓGa1_{-y}Mg_{y}O₃ ou de structure du type bimevox, par exemple Bi₂V1₋ₓMeₓO_{z}, ou de structure du type lamox, par exemple La₂Mo₂O₉, ou encore de structure apatite, par exemple Me₁₀(XO₄)₆Y₂, ou du type oxydes mixtes de gadolinium et cérium (CGO). Le CGO a l'avantage d'être à la fois conducteur ionique et conducteur électronique.

Le matériau inorganique poreux peut comprendre ou être constitué par un matériau inorganique conducteur protonique du type pérovskite, par exemple SrCe₁₋ₓMₓO_{3-α} où M est une terre rare, typiquement le composé SrCeₓYb₁₋ₓO_{3-α}, ou du type BaCe₁₋ₓMₓO_{3-α}, par exemple le composé BaCeO₃, ou encore un composé de la famille LaₓSr₁₋ₓScO_{3-α}, par exemple La_{0,9}Sr_{0,1}ScO_{3-α}.

Selon un mode préféré, le matériau inorganique poreux est à base de carbure de silicium SiC, de préférence recristallisé à une température comprise entre 2100 et 2400°C. En particulier, le matériau inorganique peut être à base de SiC dopé, par exemple par de l'aluminium ou de l'azote, et de telle façon que sa résistivité électronique soit inférieure de préférence à 20 Ohm.cm, de préférence encore à 15 Ohm.cm, de manière plus préférée à 10 Ohm.cm à 400°C. Par l'expression « à base de carbure de silicium », on entend au sens de la présente description que le matériau est constitué d'au moins 25% poids, de préférence d'au moins 45% poids et de manière très préférée d'au moins 70% poids de SiC.

Le matériau inorganique poreux peut également comprendre ou être constitué par un mélange de carbure de silicium éventuellement dopé et au moins un matériau inorganique conducteur par ion oxygène par exemple de structure fluorite (par exemple, zircone stabilisée par CaO ou par Y₂O₃, oxydes mixtes de gadolinium et cérium), ou de structure pérovskite (gallate, composés à base de Lanthane par exemple LaAlO₃ ou LaGaO₃ ou La₁₋ₓSrₓGa₁₋ₓMg_{y}O₃ ou de structure bimevox (par exemple Bi₂V₁₋ₓMeₓO_{z}), ou de structure lamox (par exemple La₂Mo₂O₉), ou de structure apatite (par exemple Me₁₀(XO₄)₆Y₂).

Selon une autre réalisation, le matériau inorganique poreux comprend ou est constitué par un mélange de carbure de silicium éventuellement dopé et au moins un matériau inorganique conducteur protonique par exemple du type pérovskite (par exemple SrCe₁₋ₓMₓO_{3-α}. où M est une terre rare, par exemple le composé SrCeₓYb₁₋ₓO_{3-α}) où du type BaCe₁₋ₓMₓO_{3-α} (par exemple le composé BaCeO₃) ou encore un composé de la famille LaₓSr₁₋ₓScO_{3-α} (par exemple La_{0,9}Sr_{0,1}SCO_{3-α}).

Dans une autre réalisation possible, le matériau inorganique poreux comprend ou est constitué de carbure de silicium éventuellement dopé, dans la porosité duquel est déposée un mélange du catalyseur A de réduction, du catalyseur B d'oxydation et d'au moins un matériau inorganique D conducteur par ion oxygène par exemple de structure fluorite (tel que zircone stabilisée par CaO ou par Y₂O₃, oxydes mixtes de gadolinium et cérium), ou de structure perovskite (gallate, composés à base de Lanthane du type LaAlO₃ ou LaGaO₃ ou La₁₋ₓSrₓGa1-_{y}Mg_{y}O₃, ou de structure bimevox (par exemple Bi₂V1-ₓMeₓO_{z}), ou de structure lamox (par exemple La₂Mo₂O₉), ou de structure apatite (par exemple Meio(XO₄)₆Y₂).

Selon un autre mode, le matériau inorganique poreux comprend ou est constitué de carbure de silicium éventuellement dopé, dans la porosité duquel est déposée un mélange du catalyseur A de réduction, du catalyseur B d'oxydation et d'au moins un matériau inorganique D conducteur protonique par exemple du type pérovskite (par exemple SrCe₁₋ₓMₓO_{3-α}. ou M est une terre rare, par exemple le composé SrCeₓYb₁₋ₓO_{3-α}) ou du type BaCe₁₋ₓMₓO_{3-α} (par exemple le composé BaCeO₃), ou encore un composé de la famille LaₓSr₁₋ₓScO_{3-α} (par exemple La_{0,9}Sr_{0,1}ScO_{3-α}).

La présente invention trouve tout particulièrement son application dans les structures utilisées pour la purification et la filtration d'un gaz d'échappement d'un moteur diesel. De telles structures, généralement désignées sous le terme filtres à particules, comprennent au moins un et de préférence une pluralité de blocs monolithiques en nid d'abeille. A la différence des dispositifs de purification précédemment décrits, dans de tels filtres, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses. Des exemples de telles structures assemblées ou non assemblées sont par exemple décrits dans les publications EP 0816065, EP 1142619, EP1306358 ou encore EP 1591430.

Dans de telles structures filtrantes, les gaz sont forcés de traverser les parois. Les travaux menés par la demanderesse ont montré que l'utilisation d'un système de catalyseur électrochimique sur la matrice texturée précédemment décrite permet de façon surprenante une très bonne conversion des espèces polluantes sans pour autant augmenter la perte de charge engendrée par l'introduction du filtre sur la ligne d'échappement.

Un tel système contribue en outre à améliorer l'efficacité de régénération du filtre en favorisant un taux d'oxydation plus important des suies.

L'invention et ses avantages seront mieux compris à la lecture des exemples qui suivent, non limitatifs de la présente invention et fournis à titre uniquement illustratif.

### EXEMPLE 1 (comparatif):

Dans un premier temps, on a synthétisé, selon des techniques bien connues, un filtre céramique assemblé en SiC dont la porosité ouverte des parois filtrantes est proche d'environ 40%. La synthèse a été effectuée dans des conditions permettant d'incorporer le dopant Al dans une proportion massique d'environ 200 ppm. Un tel dopage a permis d'obtenir une structure présentant une conductivité électronique sensiblement améliorée, c'est-à-dire une résistivité inférieure à 10 ohm.cm à 400°C.
Plus précisément, la structure filtrante est obtenue par assemblage d'éléments filtrants en carbure de silicium d'abord extrudés, séchés puis cuits selon des techniques bien connues et liés par un ciment de jointement selon les techniques décrites par exemple dans le brevet EP 1 142 619. Les parties filtrantes se caractérisent par un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses.
On a utilisé initialement dans cet exemple deux fractions de grains de carbure de silicium de teneur massique en Al d'environ 200 ppm. Une première fraction présente un diamètre médian d₅₀ compris entre 5 µm et 50 µm, au moins 10% en masse des grains composant cette fraction présentent un diamètre supérieur à 5 µm. La deuxième fraction présente un diamètre médian des grains inférieur à 5 µm. Les deux fractions sont mélangées dans un rapport massique égal à 1 avec un liant temporaire du type méthylcellulose et un agent porogène organique de polyéthylène.
Les caractéristiques géométriques principales du filtre ainsi obtenu sont reportées dans le tableau 1:

**Tableau 1**

| Géométrie des canaux | Carré |
|---|---|
| Densité de canaux | 180 cpsi (canaux par inch carré, 1 inch = 2,54 cm, soit environ 28 canaux/cm²) |
| Epaisseur des parois | 350 µm |
| Longueur | 15,2 cm |
| Largeur | 3,6 cm |
| Volume | 2,47 litres |
| Porosité | Environ 47% |
| Diamètre médian de pores | Environ 15µm |

Les catalyseurs A et B et le composé conducteur ionique D ont été synthétisés de la manière suivante :

### Catalyseur A :

On imprègne 500g d'une poudre d'alumine gamma commercialisée par Sasol par une solution aqueuse de nitrate de Ba. L'ensemble est ensuite séché à 110°C puis calciné à 600°C pendant 3 heures sous air, de manière à obtenir une poudre de grains d'alumine revêtus de BaO.
Cette poudre est ensuite imprégnée, selon les techniques bien connues, dans une solution aqueuse de chlorure de dinitrodiamine de platine puis séchée à 110°C pendant 3 heures, et enfin portée à 250°C pendant 2 heures de manière à obtenir un catalyseur A.

### Catalyseur B :

300 grammes d'une poudre zéolithe de type Mordénite sont mis en suspension dans une solution de d'hydroxy-nitrate de zirconium, à laquelle est ajoutée une solution aqueuse d'ammonium de manière à ajuster à au moins PH 8. La solution est ensuite filtrée, séchée à 110°C, puis calcinée à 500°C pendant une heure. La poudre ainsi obtenue est dispersée dans une solution aqueuse de nitrate de rhodium, puis filtrée, séchée à 400°C pendant une heure pour obtenir le catalyseur B.

### Conducteur ionique D:

Le conducteur ionique D utilisé est une poudre de YSZ (zirconia powder basic grade TZ) commercialisée par la société Tosoh.

La granulométrie des poudres de catalyseurs A, B et du conducteur ionique D est adaptée et choisie en fonction de la porosité du corps céramique poreux. Le diamètre médian de ces poudres est notamment choisi de façon à être inférieur à 5µm.
Dans un deuxième temps, la structure brute de filtre est ensuite plongée dans un bain d'une solution aqueuse contenant les catalyseurs A, B et le composé D, dans des proportions permettant d'obtenir environ 2% en masse de chaque composé sur le support SiC, par rapport à la masse totale du support.
Le filtre est imprégné par la solution selon un mode de mise en oeuvre similaire à celui décrit dans le brevet US 5,866,210. Le filtre est ensuite séché à environ 150°C puis chauffé à une température d'environ 500°C. On obtient ainsi un filtre électrocatalytique de référence.

### EXEMPLE 2 (selon l'invention):

La structure brute obtenue selon l'exemple 1 a été soumise à un premier traitement de texturation avant l'incorporation des catalyseurs A et B et du conducteur ionique D.
Durant ce traitement, un matériau servant à la texturation est introduit dans la porosité du filtre sous la forme d'une barbotine. Plus précisément, une suspension à base de SiC dopé à 200 ppm d'Aluminium environ est préparée.
La suspension comprend, en pourcentage poids, 96% d'eau, 0,1% de dispersant du type non ionique, 1,0% d'un liant de type PVA (polyvinylalcool) et 2,8% d'une poudre de SiC de diamètre médian 0,5µm et dont la pureté est supérieure à 98% poids.
Un tel dopage permis selon un premier avantage d'obtenir une structure présentant une conductivité électronique de surface sensiblement améliorée, c'est-à-dire une résistivité inférieure à 10 ohm.cm à 400°C. La structure texturée présente ainsi une conductivité électronique de surface et constitue ainsi l'élément C du système.

La barbotine ou suspension est préparée selon les étapes suivantes :
Le PVA, utilisé comme liant, est dans un premier temps dissous dans l'eau chauffée à 80°C. Dans une cuve, maintenue sous agitation et contenant le PVA dissous dans l'eau, est introduit le dispersant puis la poudre de SiC jusqu'à obtenir une suspension homogène.
La barbotine est déposée dans le filtre par simple immersion, l'excès de la suspension étant éliminé par aspiration sous vide, sous une pression résiduelle de 10 mbars. Le filtre ainsi obtenu est soumis à une étape de séchage à 120°C pendant 16 heures puis à un traitement thermique de frittage à 1700°C sous argon pendant 3h.

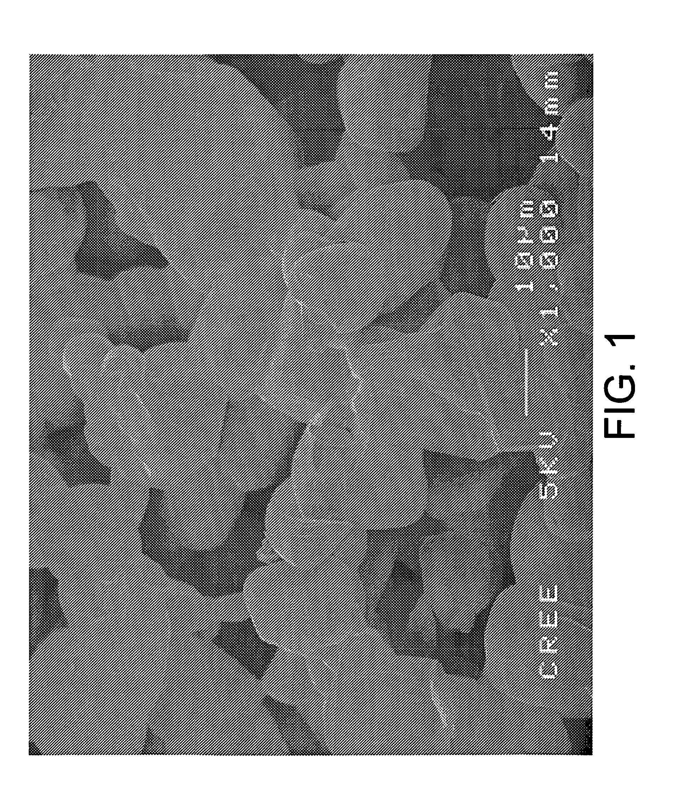

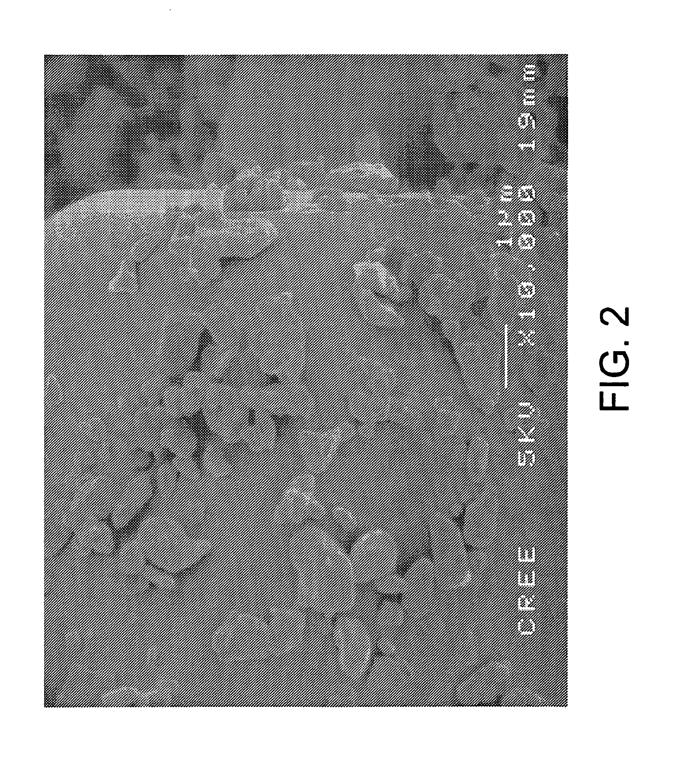

La figure 2 montre une photographie MEB, en coupe, des parois filtrantes du filtre texturé ainsi obtenu, montrant les irrégularités à la surface des grains de SiC constituant la matrice poreuse. Les irrégularités se présentent sous la forme de cristallites et d'amas de cristallites de SiC. Cette figure 2 est à comparer avec la figure 1 qui correspond à la structure brute constituée par les grains de SiC, avant le traitement de texturation.
Selon ce mode de réalisation, le paramètre d mesuré correspond au diamètre moyen, au sens précédemment décrit, des cristallites présents à la surface des grains de SiC soit environ 0,5µm. Le paramètre h correspond à la hauteur moyenne h desdits cristallites, soit environ 0,5µm. Ce dépôt couvre environ 18% de la surface offerte totale des grains de SiC.
Dans un deuxième temps, la structure brute de filtre est ensuite plongée dans un bain d'une solution aqueuse contenant les catalyseurs A, B et le composé D, dans les mêmes proportions et selon les mêmes principes et mode opératoire que l'exemple 1. En particulier, le filtre est imprégné, séché et chauffé selon le même mode opératoire que pour l'exemple 1.
On obtient ainsi un filtre electrocatalytique selon l'invention.

Dans un troisième temps la structure est séchée de nouveau à 150°C puis chauffée à une température d'environ 500°C sous air afin d'obtenir une structure selon l'invention.

Les propriétés des filtres catalytiques obtenus selon les exemples 1 et 2 ont été évaluées selon différents tests :

### 1°) test de conversion des NOx:

Les performances du filtre ont été mesurées à une température de 400°C grâce aux deux mélanges synthétiques de gaz selon le tableau 2, caractéristiques des gaz d'échappement dans un fonctionnement d'un moteur Diesel en mélange pauvre (mélange 1) et dans un fonctionnement d'un moteur Diesel en mélange riche (mélange 2).

**Tableau 2**

| Constituant | Mélange 1 (pauvre) | Mélange 2 (riche) |
|---|---|---|
| HC (ppm volume) | 1000 | 1000 |
| CO (ppm volume) | 600 | 600 |
| NOₓ (ppm volume) | 500 | 500 |
| CO₂ (% volume) | 6 | 6 |
| H₂O (% volume) | 10 | 10 |
| O₂ (% volume) | 10 | 0,5 |
| N₂ | reste | reste |

Le test est opéré de la manière suivante : Le mélange de gaz pauvre 1 passe d'abord sur le filtre catalysé maintenu dans un four électrique à 400°C. Toutes les deux minutes, la composition des gaz est basculée sur le mélange de gaz riche 2 pendant 5 secondes, avant d'être rebasculée sur le mélange 1 et ainsi de suite. La composition des gaz en sortie de four est analysée après stabilisation de façon à connaître la quantité de NOₓ convertie.
Le test tel qu'il vient d'être décrit a été mené dans les mêmes conditions sur le filtre électrocatalysé selon l'exemple 1 (non texturé) et sur le filtre électrocatalysé selon l'exemple 2 (texturé).

**Tableau 3**

| | Filtre selon l'exemple 1 | Filtre selon l'exemple 2 |
|---|---|---|
| Taux de conversion des NOₓ (% volume) | 50 | 55 |

Les résultats reportés dans le tableau 3 montre que le filtre selon l'invention (exemple 2) présente un taux de conversion des NOx supérieur à celui du filtre comparatif (exemple 1)

### 2°) test de perte de charge (pressure loss):

La perte de charge a été mesurée sur filtre selon les techniques de l'art, pour un débit d'air de 600 m³/h dans un courant d'air ambiant. Par perte de charge, on entend au sens de la présente invention la pression différentielle existant entre l'amont et l'aval du filtre.
Les résultats expérimentaux sont reportés dans le tableau 4.

**Tableau 4**

| | Filtre selon l'exemple 1 | Filtre selon l'exemple 2 |
|---|---|---|
| Perte de charge mesurée en mbars | 53 | 53 |

De façon surprenante, on peut constater, par la comparaison des données du tableau 4, que la perte de charge du filtre selon l'invention n'est pas augmentée malgré la microtexturation et similaire à celle sur le filtre de référence.

### 3°) test de vieillissement :

Pour estimer leur capacité de résistance au vieillissement, le filtre obtenu selon l'exemple 1 et le filtre obtenu selon l'exemple 2 ont été soumis à un vieillissement accéléré, par rapport aux conditions normales d'utilisation dans une ligne d'échappement.

Les filtres sont placés dans un four à 800°C sous atmosphère d'air humide pendant une durée de 5 heures telle que la concentration molaire d'eau soit maintenue constante à 3%. On mesure le taux de conversion NOx sur les filtres ainsi vieillis selon le même protocole expérimental que précédemment (voir 1°).

**Tableau 5**

| | Filtre vieilli selon exemple 1 | Filtre vieilli selon exemple 2 |
|---|---|---|
| Taux de conversion des NOx (% volume) | 49 | 54 |

Après vieillissement, les résultats reportés dans le tableau 5 montrent que le filtre selon l'invention (exemple 2) présente toujours un taux de conversion des NOx supérieur à celui du filtre comparatif (exemple 1).

## Revendications

1. Structure, de préférence en nid d'abeille, pour la purification d'un gaz pollué, par exemple un gaz d'échappement d'un moteur diesel ou essence, comprenant :
- une matrice poreuse d'un matériau inorganique, sous la forme de grains reliés les uns aux autres de façon à ménager entre eux des cavités telles que sa porosité ouverte soit comprise entre 20 et 70% et le diamètre médian de sa distribution de pores compris entre 5 et 40 µm,
- un système électrochimique de traitement dudit gaz constitué par:
a. un catalyseur A de réduction des espèces polluantes du type NOₓ,
b. un catalyseur B d'oxydation des espèces polluantes du type hydrocarbures HC ou CO,
c. un composé C conducteur électronique,
d. un composé D conducteur ionique,
lesdits catalyseurs A et B étant en contact électronique par l'intermédiaire du composé C et en contact ionique par l'intermédiaire du composé D, ladite structure étant **caractérisée :**
- **en ce que** les catalyseurs A et B sont disposés dans la porosité du matériau inorganique,
- **en ce que** les grains et éventuellement les joints de grains du matériau inorganique constituant la matrice sont recouverts sur au moins une partie de leur surface d'un matériau de texturation, ladite texturation consistant en des irrégularités dont les dimensions sont comprises entre 10 nm et 5 microns,
- **en ce que** ledit matériau de texturation est conducteur ionique, électronique ou ionique et électronique et constitue respectivement l'élément C, l'élément D ou les éléments C et D du système électrochimique de traitement des gaz.

2. Structure selon la revendication 1 dans laquelle ladite texturation consiste en des irrégularités se présentant par exemple sous la forme de billes, de cristallites, d'amas polycristallins, voire de bâtonnets ou de structures aciculaires, de creux ou de cratères, lesdites irrégularités présentant un diamètre moyen d compris entre environ 10 nm et environ 5 microns et une hauteur ou une profondeur moyenne p comprise entre environ 10 nm et environ 5 microns.

3. Structure selon l'une des revendications précédentes, dans laquelle le diamètre équivalent moyen d et/ou la hauteur h ou la profondeur moyenne p des irrégularités sont inférieurs à la taille moyenne des grains du matériau inorganique constituant la matrice d'un facteur compris entre 1/2 et 1/1000.

4. Structure selon l'une des revendications précédentes, dans laquelle le matériau de texturation recouvre au moins 10%, et de préférence au moins 15%, de la surface totale des grains et éventuellement des joints de grains du matériau inorganique constituant la matrice poreuse.

5. Structure selon l'une des revendications précédentes, dans laquelle le matériau de texturation est de même nature que le matériau inorganique constituant la matrice.

6. Structure selon l'une des revendications précédentes, dans laquelle le matériau inorganique constituant la matrice est à base de carbure de silicium SiC.

7. Structure selon la revendication 6, dans laquelle le matériau inorganique est à base de SiC dopé, par exemple par de l'aluminium ou de l'azote, et de telle façon que sa résistivité électronique soit inférieure à 20 Ohm.cm à 400°C.

8. Structure selon l'une des revendications précédentes, dans laquelle les irrégularités sont constituées par des cristallites ou par un amas de cristallites d'un matériau cuit ou fritté à la surface des grains de la matrice poreuse.

9. Structure selon l'une des revendications précédentes, dans laquelle les irrégularités sont constituées essentiellement par des billes d'un matériau conducteur électronique et/ou ionique.

10. Structure selon l'une des revendications précédentes, dans laquelle les irrégularités se présentent sous la forme de cratères creusés dans un matériau cuit ou fritté à la surface des grains de la matrice poreuse.

11. Structure selon l'une des revendications précédentes pour la purification et la filtration d'un gaz d'échappement d'un moteur diesel, comprenant au moins un et de préférence une pluralité de blocs monolithiques en nid d'abeille, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses.

## Claims

1. A structure, preferably a honeycomb structure, for the purification of a polluted gas, for example an exhaust gas of a diesel or gasoline engine, comprising:
- a porous matrix of an inorganic material, in the form of grains that are interconnected so as to provide cavities between them, such that the open porosity of which is between 20 and 70% and the median diameter of its pore distribution is between 5 and 40 µm; and
- an electrochemical system for the treatment of said gas, formed by:
a. a reduction catalyst A for reducing the polluting species of the NOₓ type,
b. an oxidation catalyst B for oxidizing the polluting species of the hydrocarbon HC type or CO type,
c. an electron-conductive compound C and
d. an ion-conductive compound D,
said catalysts A and B being in electronic contact via compound C and in ionic contact via compound D, said structure being **characterized:**
- **in that** catalysts A and B are placed in the pores of the inorganic material;
- **in that** the grains and possibly the grain boundaries of the inorganic material constituting the matrix are covered over at least part of their surface with a texturizing material, said texturizing consisting of irregularities having dimensions between 10 nm and 5 microns; and
- **in that** said texturizing material is an ionic, electronic or ionic/electronic conductor and constitutes, respectively, the element C, the element D or the elements C and D of the electrochemical gas treatment system.

2. The structure as claimed in claim 1, in which said texturizing consists of irregularities taking for example the form of beads, crystallites, polycrystalline clusters, or even rods or acicular structures, hollows or craters, said irregularities having a mean diameter d of between about 10 nm and about 5 microns and a mean height or a mean depth p of between about 10 nm and about 5 microns.

3. The structure as claimed in either of the preceding claims, in which the mean equivalent diameter d and/or the mean height h or the mean depth p of the irregularities are/is smaller than the mean size of the grains of the inorganic material constituting the matrix by a factor of between 1/2 and 1/1000.

4. The structure as claimed in one of the preceding claims, in which the texturizing material covers at least 10%, and preferably at least 15%, of the total surface of the grains and possibly of the grain boundaries of the inorganic material constituting the porous matrix.

5. The structure as claimed in one of the preceding claims, in which the texturizing material is of the same nature as the inorganic material constituting the matrix.

6. The structure as claimed in one of the preceding claims, in which the inorganic material constituting the matrix is based on silicon carbide SiC.

7. The structure as claimed in claim 6, in which the inorganic material is based on doped SiC, for example doped with aluminum or with nitrogen, and in such a way that its electronic resistivity is less than 20 Ω.cm at 400°C.

8. The structure as claimed in one of the preceding claims, in which the irregularities are formed by crystallites or by a cluster of crystallites of a fired or sintered material on the surface of the grains of the porous matrix.

9. The structure as claimed in one of the preceding claims, in which the irregularities essentially consist of beads of an electron-conductive and/or ion-conductive material.

10. The structure as claimed in one of the preceding claims, in which the irregularities take the form of craters hollowed out in a fired or sintered material on the surface of the grains of the porous matrix.

11. The structure as claimed in one of the preceding claims for the purification and filtration of an exhaust gas of a diesel engine, comprising at least one honeycomb monolith and preferably a plurality of honeycomb monoliths, said monolith(s) comprising a plurality of adjacent ducts or channels having mutually parallel axes separated by porous walls, said ducts or channels being closed off by plugs at one or other of their ends in order to define inlet ducts opening onto a gas intake face and outlet ducts opening onto a gas discharge face, in such a way that the gas passes through the porous walls.

## Patentansprüche

1. Struktur, vorzugsweise Bienenneststruktur, zur Reinigung eines verschmutzten Gases, beispielsweise eines Diesel- oder Benzinmotorabgases, umfassend:
eine poröse Matrix aus inorganischem Material, in der Form von zueinander verbundenen Körnern, um Hohlraüme zwischen diesen derart zu schaffen, dass ihre offene Porosität zwischen 20 und 70% und der Mediandurchmesser ihrer Porenverteilung zwischen 5 und 40 µm beträgt,
ein elektrochemisches System zur Behandlung des gesagten Gases,
bestehend aus:
a. einem Reduktionskatalysator A der NOx-artigen verschmutzenden Spezies,
b. einem Oxydationskatalysator B der HC- oder CO-kohlenwasserstoffhaltigen verschmutzenden Spezies,
c. einem elektronischen leitfähigen Verbund C,
d. einem ionischen leitfähigen Verbund D,
wobei die gesagten Katalysatoren A und B durch den Verbund C in elektronischem Kontakt und durch den Verbund D in ionischem Kontakt stehen, wobei die gesagte Struktur **dadurch gekennzeichnet ist:**
**dass** die Katalysatoren A und B in der Porosität des inorganischen Materials angeordnet sind,
**dass** die Körner und eventuell die Kornfugen des die Matrix bildenden inorganischen Materials auf wenigstens einem Teil ihrer Oberfläche mt einem Texturierungsmaterial überdeckt sind, wobei die gesagte Texturierung aus Unebenheiten besteht, deren Abmessungen zwischen 10 nm und 5 Mikronen betragen,
**dass** das gesagte Texturierungsmaterial ionisch, elektronisch leitfähig oder zugleich ionisch und elektronisch leitfähig ist und das Element C, das Element D beziehungsweise die Elemente C und D des elektrochemischen Systems zur Gasbehandlung ausbildet sind.

2. Struktur nach Anspruch 1, wobei die gesagte Texturierung aus Unebenheiten, beispielsweise in der Form von Kugeln, Kristalliten, polykristallinen Anhäufungen, eventuell Stäbchen beziehungsweise acikularen Strukturen, Tälern oder Kratern besteht, wobei die gesagten Unebenheiten einen Durchschnittsdurchmesser d zwischen ungefähr 10 nm und ungefähr 5 Mikronen und eine Höhe h beziehungsweise Durchschnittstiefe p zwischen ungefähr 10 nm und ungefähr 5 Mikronen aufweisen.

3. Struktur nach einem der vorhergehenden Ansprüche, worin der durchschnittliche gleichgültige Durchmesser d und/oder die Höhe h beziehungsweise die Durchschnittstiefe p der Unebenheiten kleiner als die durchschnittliche Grösse der die Matrix bildenden Körner des inorganischen Materials mit einem Faktor zwischen 1/2 und 1/1000 sind.

4. Struktur nach einem der vorhergehenden Ansprüche, worin das Texturierungsmaterial mindestens 10%, und vorzugsweise mindestens 15%, der Gesamtoberfläche der Körner und eventuell der Kornfugen des die poröse Matrix bildenden inorganischen Materials überdeckt.

5. Struktur nach einem der vorhergehenden Ansprüche, worin das Texturierungsmaterial wie das die Matrix bildende inorganische Material gleichartig ist.

6. Struktur nach einem der vorhergehenden Ansprüche, worin das die Matrix bildende inorganische Material auf SiC-Siliziumkarbid basiert ist.

7. Struktur nach Anspruch 6, worin das inorganische Material so auf mit Aluminium beziehungsweise Nitrogen-gedoptem SiC basiert ist, dass sein elektronischer Leitungswiderstand kleiner als 20 Ohm.zm bei 400°C ist.

8. Struktur nach einem der vorhergehenden Ansprüche, worin die Unebenheiten aus Kristalliten beziehungsweise einer Anhäufung von Kristalliten, einem an der Oberfläche der Körner der porösen Matrix gebackenen beziehungsweise gesinterten Material gebildet sind.

9. Struktur nach einem der vorhergehenden Ansprüche, worin die Unebenheiten im Wesentlichen durch Kugeln aus einem elektronischen und/oder ionischden leitfähigen Material gebildet sind.

10. Struktur nach einem der vorhergehenden Ansprüche, worin die Unebenheiten in der Form von an der Oberfläche der Körner der porösen Matrix angeordneten, in einem gebackenen beziehungsweise gesinterten ausgehöhlten Kratern sind.

11. Struktur nach einem der vorherigen Ansprüche zur Reinigung und Filtration eines Dieselmotorabgases, umfassend wenigstens einen und vorzugsweise eine Mehrzahl von bienennestförmigen monolithischen Blöcken, wobei der gesagte beziehungsweise die gesagten Blöcke einen Satz von zueinander parallellen, durch poröse Wände getrennten, benachbart angeordneten Leitungen oder Kanäle umfassen, die an einem ihrer Ende durch Stöpsel abgeschlossen sind, um sich nach einer Gasansaugseite öffnende Einlassleitungen sowohl als sich nach einer Gasabsaugseite öffnende Auslassleitungen abzugrenzen, so dass das Gas durch die porösen Wände fliesst.
